# EUROPÄISCHE PATENTSCHRIFT

(11) **EP 0 968 073 B1**
(45) Veröffentlichungstag und Bekanntmachung des Hinweises auf die Patenterteilung: **17.10.2001**
(21) Anmeldenummer: 98912332.8
(22) Anmeldetag: 19.02.1998
(51) Int. Cl.: B23K 37/047

(54) **VERFAHREN UND VORRICHTUNG ZUM ZUFÜHREN, SPANNEN UND BEARBEITEN, INSBESONDERE ZUM GEOMETRIE-SCHWEISSEN VON BAUTEILEN VON FAHRZEUGKAROSSERIEN IN EINER BEARBEITUNGSSTATION**
DEVICE AND METHOD FOR FEEDING, CLAMPING AND PROCESSING, PARTICULARLY FOR GEOMETRIC WELDING OF AUTOMOBILE BODY COMPONENTS IN A WORK STATION
PROCEDE ET DISPOSITIF POUR AMENER, SERRER ET USINER DES PIECES, EN PARTICULIER POUR LE SOUDAGE GEOMETRIQUE DE PIECES DE CARROSSERIES AUTOMOBILES DANS UNE STATION D'USINAGE

(30) Priorität: 22.03.1997 DE 19712129
(43) Veröffentlichungstag der Anmeldung: 05.01.2000
(73) Patentinhaber: ThyssenKrupp Technologies AG, 45128 Essen (DE)
(72) Erfinder: VOGT, Franz-Josef, D-88289 Waldburg (DE); LANG, Wolf, Dieter, D-88281 Schlier (DE); EGO, Thomas, D-88214 Ravensburg (DE); JÄCK, Kurt, D-88326 Aulendorf (DE); ERB, Hans, Peter, D-88276 Berg (DE); ZIMMER, Erich, D-66687 Wadern-Lockweiler (DE); RÖHLING, Bernd, D-36151 Burghaun (DE); WIEGAND, Manfred, D-36088 Hünfeld (DE)
(74) Vertreter: Dahlkamp, Heinrich-Leopold, Dipl.-Ing.
(86) Internationale Anmeldenummer: EP9800944
(87) Internationale Veröffentlichungsnummer: WO9842477

(56) Entgegenhaltungen:
- GB-A- 2 191 740
- US-A- 4 667 866
- US-A- 4 811 891

## Beschreibung

Die Erfindung bezieht sich auf ein Verfahren gemäß Oberbegriff des Anspruches 1 und auf eine Vorrichtung zur Durchführung des Verfahrens gemäß Oberbegriff des Anspruches 3. Ein solches Verfahren und eine solche Vorrichtung sind aus der US-A-4 667 866 bekannt.

Aus der DE 28 10 822 C2 und der DE 32 30 455 C2 sind Vorrichtungen zum Schweißen von lose zusammengefügten Karosserien für Kraftfahrzeuge bekannt, mit einem Schweiß- und Fixierplatz, in welchem eine Transportbahn zum Transport der Karosserie angeordnet ist, wobei auf jeder Seite der Transportbahn jeweils aus einer Bereitschafts- in eine Arbeitsstellung und zurück bewegbare Seitenteilträger mit an die Karosserie anpressbaren Positioniereinrichtungen angebracht sind, die an die geometrische Form der zu schweißenden Karosserie angepaßte Positionierarme aufweisen und wobei seitlich der Transportbahn mindestens eine Schweißeinrichtung mit einem an die Karosserie anstellbaren Schweißkopf vorhanden ist.

Die Positioniereinrichtungen jeder Seite sind dabei an Seitenteilträgern angeordnet, die an in Transportrichtung der Karosserie verlaufenden als Drehachse ausgebildeten Schienen schwenkbar aufgehängt sind. Die Seitenteilträger wirken dabei als Seitenteilspannrahmen für die bereits vorher in einem eigenen Arbeitsgang lose mit der Bodengruppe verbundenen Karosserieseitenteile. Zum Austausch der Seitenteilträger gegen einen Satz anderer Seitenteilträger, deren Positioniereinrichtung auf die geometrische Form eines anderen Karosserietyps abgestellt sind, werden diese Seitenteilträger an den Schienen in Transportrichtung der Karosserie verfahren. Für das lose Zusammenfügen der Karosserie, insbesondere das Anbringen der Karosserieseitenteile und das anschließende Geometrie-Schweißen und gegebenenfalls das Ausschweißen sind dabei jeweils eigene Stationen erforderlich, die viel Freiraum benötigen. Außerdem ist der Wechsel von einem Karosserietyp auf einen anderen relativ aufwendig.

Aus der WO 95/32886 ist ein Verfahren und eine Vorrichtung zum Zuführen, Spannen und Bearbeiten von Bauteilen einer Fahrzeugkarosserie in einer Bearbeitungsstation bekannt, wobei die Bauteile mit ein oder mehreren Spannrahmen gespannt und die Spannrahmen für die Seitenteilrahmen und die Dachrahmen von ein oder mehreren mehrachsigen Manipulatoren gehandhabt und zugeführt werden. Mit Hilfe der Manipulatoren werden die Spannrahmen dabei zu einem unter Bildung eines die Bauteile an mindestens vier Seiten umgebenden Spannrahmengehäuses aneinander abgestützt, positioniert und verriegelt, wobei die Spannrahmen geeignete Positioniereinrichtungen haben und ein selbsttragendes Spannrahmengehäuse bilden, das vorzugsweise ringförmig oder kubisch um die Fahrzeugkarosserie geschlossen wird. Hierzu wird in der Halle sehr viel Platz benötigt und es kann erst mit dem Geometrie-Schweißen begonnen werden, wenn jeweils das gesamte Spannrahmengehäuse geschlossen ist.

Der Erfindung liegt die Aufgabe zugrunde ein gattungsgemäßes Verfahren und eine Vorrichtung zur Durchführung dieses Verfahrens vorzuschlagen, bei dem die vorgenannten Probleme nicht bestehen.

Die Lösung dieser Aufgabe ist in den Patentansprüchen 1 und 3 wiedergegeben. Die Unteransprüche 2 und 4 bis 9 enthalten sinnvolle ergänzende Maßnahmen beziehungsweise Ausführungsformen dazu.

Das erfindungsgemäße Geometrieschweißsystem ist ein flexibles Kombinationswerkzeug-Konzept zum Geometrie-Schweißen von Kfz-Karosserien (Bodengruppe, Seitenteile, Dachquerträger und Dachblech), das modular aufgebaut ist. Durch die Verwendung eines hochgelegenen Vierachsportales, an dem Portalroboter in X und Y-Richtung verfahren werden, können im Bereich des Vierachsportales zahlreiche Werkzeugablagen für Seitenteilspannrahmen so angeordnet werden, daß sie für den Portalroboter direkt zugänglich sind. Die Anzahl der vom System schweißbaren Karosseriemodelle ist vorzugsweise nur durch die Anzahl der Karosserieseitenteil-Werkzeugablagen im System begrenzt, jedoch flexibel erweiterbar.
Die manuell und/oder durch einen Roboter in den Seitenteilspannrahmen eingelegten Karosserieseitenteile können dann mit jeweils einem höhenverstellbaren und um eine vertikale Achse drehbaren Portalroboter an beiden Seiten der Karosserie positioniert und gegebenenfalls mit Hilfe von stationären Positionier- und Spannelementen mit den zu verschweißenden Teilen verspannt werden. Anschließend werden zum Geometrieschweißen die seitlich neben dem Karosseriefördersystem angeordneten Schweißroboter auf die Schweißstelle zugeschwenkt bzw. entsprechend verfahren. Dadurch, daß die Portalroboter für die Seitenteilspannrahmen an einem hochgelegenen Vierachsportal hängen und in X- und Y-Richtung verfahrbar sind, können die seitlich auf dem Fußboden stehenden Schweißroboter ungehindert für den Schweißprozeß verfahren werden und der gesamte Raum ist für sämtliche Wartungs- und Bedienungsarbeiten gut zugänglich.

Das erfindungsgemäße Vierachsportal besteht aus parallel oder rechtwinklig zum Karosseriefördersystem angeordneten stationären Schienen, ein oder mehreren auf diesen Schienen verfahrbaren Querträgern, in Längsrichtung auf den Querträgern verfahrbaren ein oder mehreren Portalrobotern und am Portalroboter vertikal beweglich und/oder um eine senkrechte Achse drehbar befestigten Seitenteilspannrahmen. Die Portalroboter können hierdurch prinzipiell alle Bereiche des von den Schienen und Querträgern eingerahmten Feldes direkt anfahren und an beliebigen Stellen einen Wechsel der Seitenteilspannrahmen vornehmen oder mit den Seitenteilspannrahmen die Karosserieseitenteile aufnehmen.

Es hat sich erfindungsgemäß als günstig erwiesen, bei quer zum Karosseriefördersystem verlaufenden stationären Schienen auf jeder Seite des Karosseriefördersystemes einen Querträger zu haben, auf der mindestens ein Portalroboter innerhalb des dortigen Bereiches des Vierachsportales verfahrbar ist. Es können dann insbesondere gleichzeitig von beiden Seiten die Portalroboter mit ihren Querträgern an die Rohkarosserie herangefahren werden. Für einen Modellwechsel können dann beide Portalroboter zu einem entsprechenden Spannrahmenbahnhof fahren und dort neue Seitenteilspannrahmen aufnehmen, um andere Karosserieseitenteile an die nächste Rohkarosserie zu bringen. Um die Taktzeiten, insbesondere auch bei häufigem Modellwechsel, weiter zu verkürzen, hat sich eine auch als Mega-Framing-Station bezeichnete Vorrichtung als günstig erwiesen. Hierbei verlaufen die stationären Schienen links und rechts parallel neben dem Karosseriefördersystem. Auf diesen stationären Schienen können im Prinzip beliebig viele Querträger, in Durchlaufrichtung der Rohkarosserien hintereinander verfahrbar sein. Das Besondere hierbei ist aber, daß auf jedem Querträger mindestens zwei Portalroboter verfahrbar sind, mit denen gleichzeitig das linke und das rechte Karosserieseitenteil zugeführt werden können. Während dieses Fügevorganges können außerdem gleichzeitig die Portalroboter auf einem oder mehreren benachbarten Querträgern mit neuen Seitenteilspannrahmen und/oder Karosserieseitenteilen bestückt werden. Hierdurch kann eine extrem kurze Taktzeit erreicht werden.

Die Seitenteilspannrahmen und auch gegebenenfalls die Spannrahmen für die vorderen und hinteren Querträger können erfindungsgemäß schwimmend mit Hilfe von flexiblen Ausgleichselementen am Portalroboter bzw. den Zuführeinheiten aufgehängt sein und über lösbare Verbindungen für die Versorgungsmedien verfügen.

Einige Vorteile des Systems lassen sich stichwortartig wie folgt zusammenfassen:
- modulare Aufbauweise
- unbegrenzte Modellauswahl beziehungsweise hohe Flexibilität
- keine Mehrfachgeometrie
- gute Zugänglichkeit der Roboter
- einfache Montage
- wartungsfreundlich
- optimales Umstiegskonzept
- einfacher Spannrahmenbahnhof
- einfache Zuführung der Bauteile, insbesondere Seitenteile und Dachquerträger
- Einsatz von beliebig vielen Schweißrobotern
- ausreichender Platz für Dachzuführung.

Die Erfindung wird anhand der beigefügten Figuren beispielsweise näher erläutert. Es zeigen:
- Figur 1: eine Draufsicht auf eine Geometrieschweißstation
- Figur 2: eine Vorderansicht nach Linie Y von Figur 1
- Figur 3: ein Schnitt nach der Linie A-A von Figur 1
- Figur 4: eine Einzelheit Z zu Figur 2 und eine Ansicht V zur Einzelheit Z
- Figur 5: eine Ansicht X zu Figur 1
- Figur 6: perspektivisch eine andere Ausführungsform zu Figur 1.

Nach den Figuren wird der Unterbau einer Karosserie gegebenenfalls gemeinsam mit einer Stirnwand durch ein Karosseriefördersystem 1 in die Rahmenschweißstation gebracht und dort positioniert und verspannt. Die Karosserieseitenteile 8 werden entweder manuell oder durch eine automatische Zuführung in Form eines Roboters 7 in den Seitenteilspannrahmen 9 eingelegt und vom Portalroboter 3, der auf dem Querträger 4 und den Schienen 5 des Vierachsportales 2 verfahrbar ist, in die Geometrieschweißstation gebracht. Die Karosserieseitenteile 8 werden mit Hilfe des Seitenteilspannrahmens 9 in der Station positioniert, sowie verspannt und bilden mit dem Stahlbau einen kompletten Verbund um die Karosse herum. Die Geometrie der mit diesem System gefertigten Rohkarosserien ist somit immer gleich.

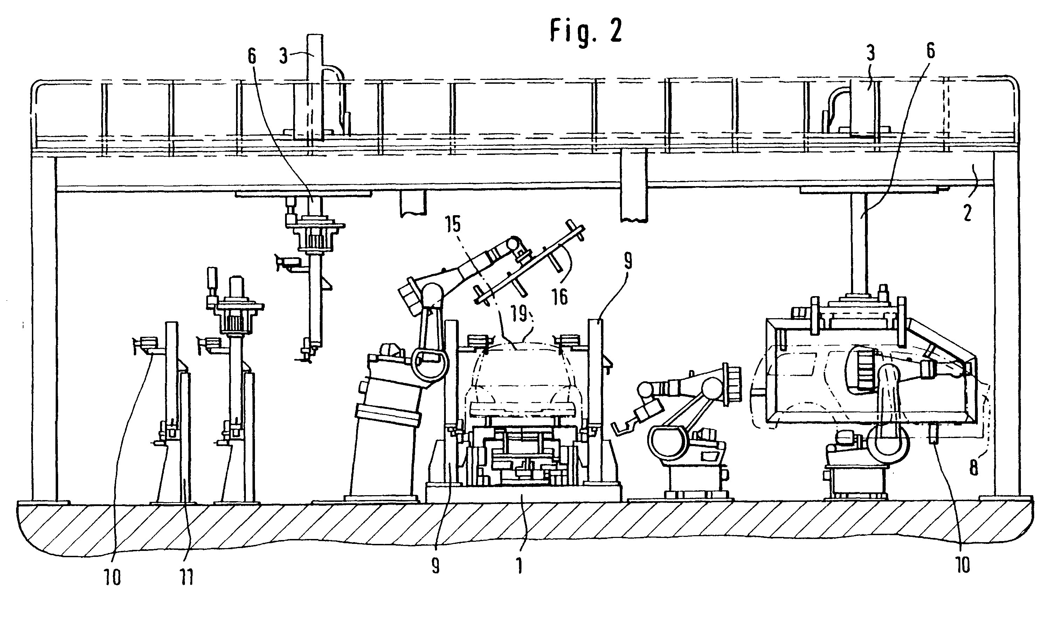

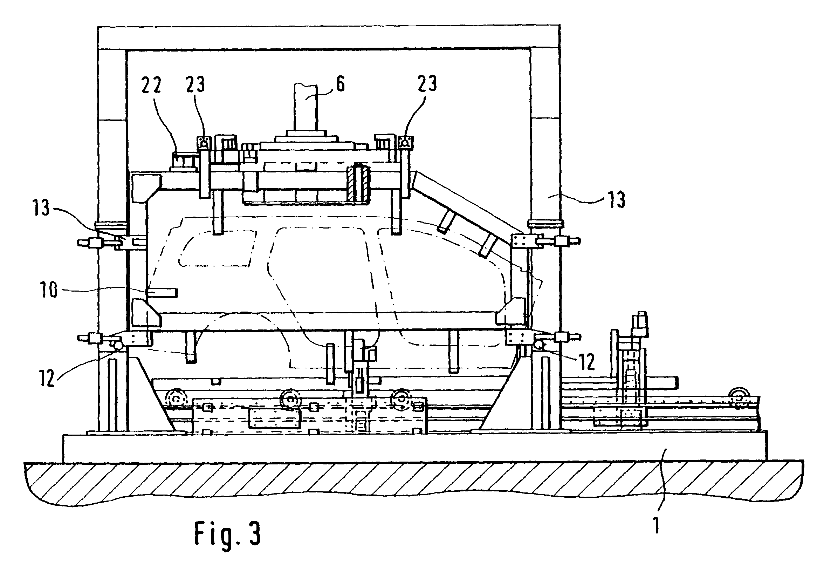

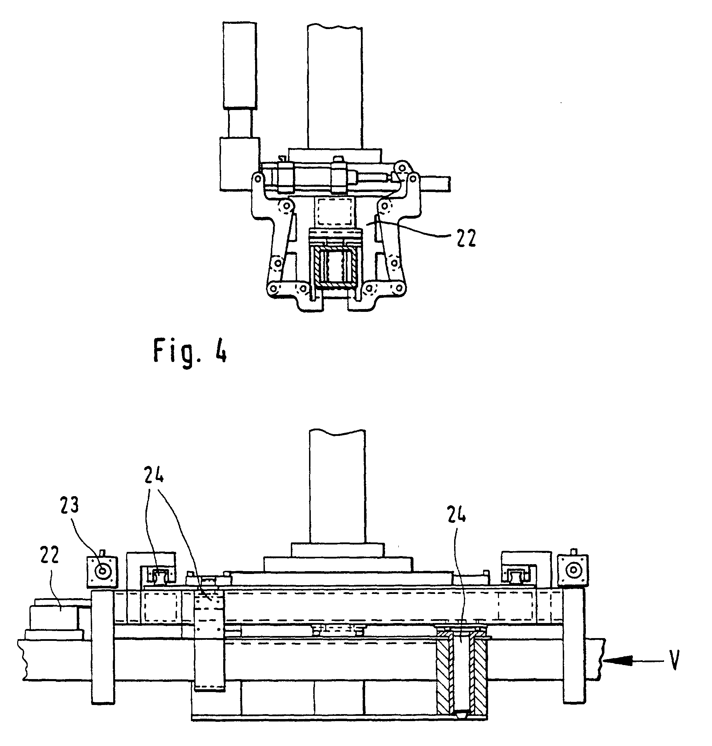

Die vorderen und hinteren Dachquerträger 15 (Spriegel) werden mit je einer Zuführeinheit 20/21 auf die Karosserieseitenteile 8 gelegt und am Seitenteilspannrahmen 9 fixiert. Zusätzlich kann ein weiterer Spannrahmen 16, beladen mit dem Dachblech 19, in die Rahmenschweißstation gebracht, positioniert und verspannt werden. Das Verschweißen der Bodengruppe mit den Karosserieseitenteilen 8 sowie das Verschweißen der Dachquerträger 15 mit den Karosserieseitenteilen 8 erfolgt durch sechs am Boden montierte Roboter 18. Der Portalroboter 3 besitzt an seiner Unterseite ein Teleskop 6 zum Anheben und Absetzen des Seitenteilspannrahmens 9 in der Werkzeugablage 11 beziehungsweise an der Karosserie. Zur Aufnahme der Karosserieseitenteile 8 sind an dem Seitenteilspannrahmen 9 in verschiedenen Höhen der Kontur des Karosserieseitenteils 8 angepaßte Spannarme 10 angeordnet. Nach Positionierung des Karosserieseitenteiles 8 an der Karosserie wird der Seitenteilspannrahmen 9 über untere und obere Positionier- und Spannelemente 12, 13 für das Geometrie-Schweißen fixiert. Innerhalb der Werkzeugablage 11 sind beispielsweise drei Positionen für den Seitenteilspannrahmen 9 angeordnet. Aus Figur 3 ist insbesondere das Karosseriefördersystem 1 mit Ausheber sowie Zentrier- und Spanneinheit für die Bodengruppe ersichtlich. Der Seitenteilspannrahmen 9 hängt dabei am unteren Teil des Teleskops 6 des Portalroboters 3 und ist zusätzlich über die Medienkupplung 22 und die Andockeinheit 23 mit diesem verbunden. Die Positionier- und Spannelemente 12 und 13 sind an stationären, senkrechten Stützen befestigt. Im unteren Teil der Figur 4 ist mit der Einzelheit Z von Figur 2 das Andocksystem für den Seitenteilspannrahmen 9 mit der Medienkupplung 22, der Andockeinheit 23 und den flexiblen Ausgleichselementen 24 näher dargestellt. Der obere Teil von Figur 4 zeigt zusätzlich eine Ansicht V zu dem unteren Teil mit einer näheren Erläuterung der Medienkupplung 22.

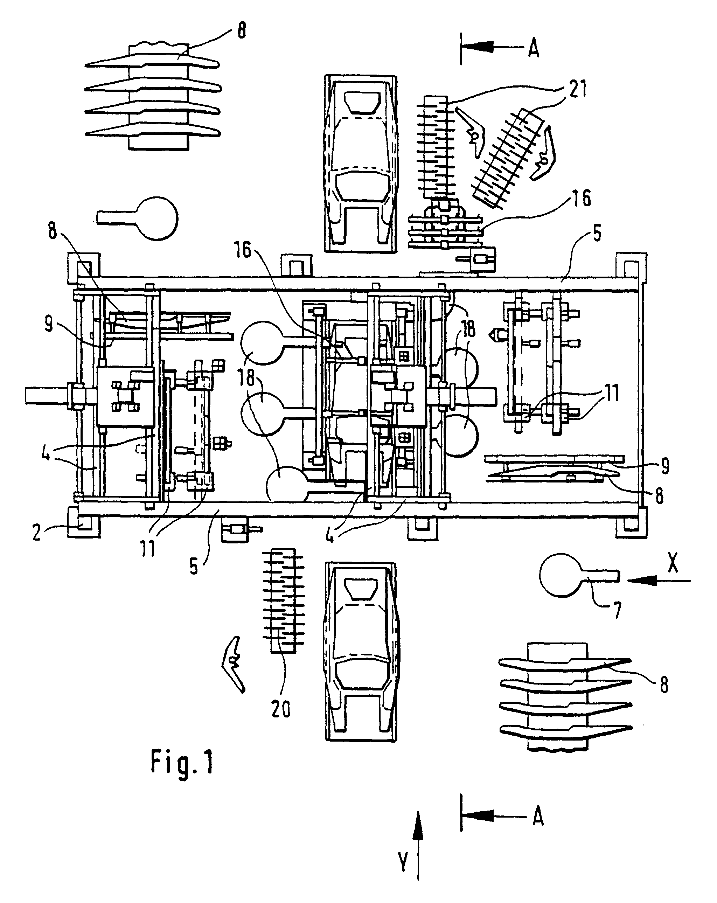

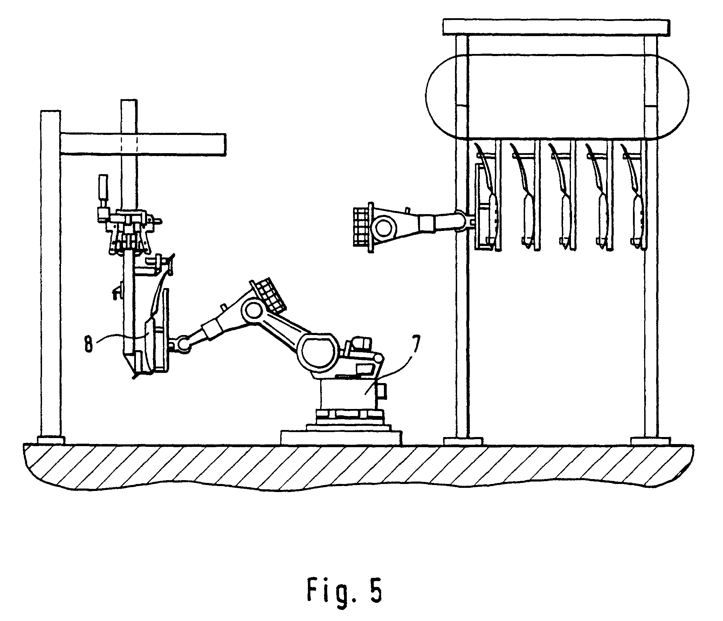

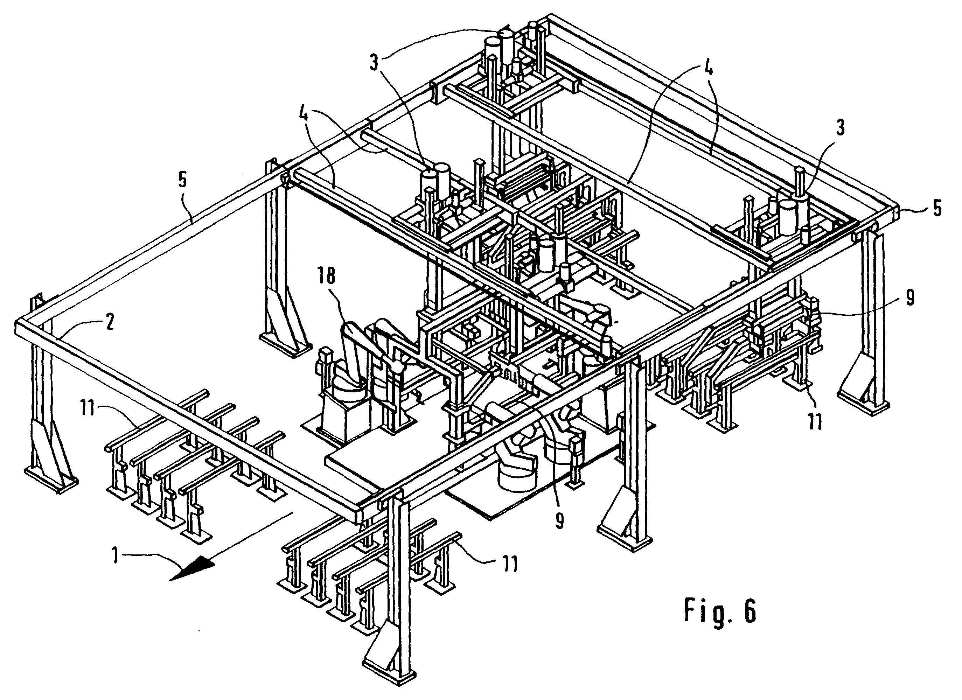

Figur 5 zeigt schließlich in der Seitenansicht X zu Figur 1 die Anordnung eines seitlich stationär auf dem Boden angeordneten Roboters 7 zur Zuführung eines Karosserieseitenteiles 8 zum Seitenteilspannrahmen 9 aus einer außerhalb des Vierachsportales 2 angeordneten Stapeleinrichtung. Alternativ können die Karosserieseitenteile natürlich auch manuell vom Bedienungspersonal in den Seitenteilspannrahmen 9 eingelegt werden. Nach Aufnahme des Karosserieseitenteiles 8 durch den Seitenteilspannrahmen 9 können beide Teile mit Hilfe des Teleskops 6 angehoben, falls erforderlich am Portalroboter um eine vertikale Achse gedreht und dann durch den Portalroboter 3 innerhalb des Vierachsportales 2 beliebig, z. B. an dem Roboter 18 vorbei oder über diesen hinweg bis vor die auf dem Karosseriefördersystem 1 angeordnete Bodengruppe verfahren werden. Dort wird der Spannrahmen 9 wie aus Figur 3 ersichtlich mit den Positionier- und Spannelementen 12,13 an stationären senkrechten Stützen, die im Bereich vor und hinter der Karosserie angeordnet sind, fest positioniert und verspannt. Nach der Verspannung des Karosserieseitenteiles 8 mit den entsprechenden Teilen der Karosse kann der fest auf dem Boden angeordnete Roboter 18 zum Geometrie-Schweißen zwischen den beiden senkrechten Stützen, an denen die Elemente 12 und 13 befestigt sind, hindurch auf das Karosserieseitenteil 8 zum Geometrie-Schweißen zubewegt werden. Die Positionierung des Seitenteilspannrahmens 9 vor der Karosserie und die Bewegung des Roboters 18 können durch die erfindungsgemäße Vorrichtung zeitlich gleichzeitig oder in kurzen Abständen hintereinander erfolgen, ohne daß zwischenzeitlich die Bodengruppe auf dem Karosseriefördersystem 1 weiterbewegt werden muß. Zum Wechsel eines Seitenteilspannrahmens 9, z.B. für ein anderes Fahrzeugmodell kann der Portalroboter 3 zu einer ebenfalls im Bereich des Vierachsportales 2 vorhandenen Werkzeugablage 11 verfahren werden. in der Figur 2 ist außerdem dargestellt, daß der Spannrahmen 16 für den Dachquerträger 15 von einem örtlich neben dem Karosseriefördersystem 1 auf dem Boden angeordneten Roboter betätigt werden kann. In der Figur 6 ist die sogenannte Mega-Framing-Station dargestellt. Hierbei sind die stationären Schienen 5 parallel neben dem Karosseriefördersystem 1 angeordnet. Auf den Schienen 5 sind zwei unabhängig voneinander verfahrbare Querträger 4 mit jeweils zwei Portalrobotern 3 angeordnet. Mit den beiden Portalrobotern 3 eines Querträgers 4 werden die beiden Karosserieseitenteile gleichzeitig mit der Rohkarosserie verbunden. In allen vier Eckbereichen des Vierachsportales 2 ist eine Werkzeugablage 11 (Spannrahmenbahnhof) für die Seitenteilspannrahmen 9 angeordnet, so daß jeweils gleichzeitig mit dem Zusammenfügen der Rohkarosserie die auf dem zweiten Querträger 4 angeordneten Portalroboter 3 z.B. neue Seitenteilspannrahmen 9 im Bereich der Werkzeugablage 11 aufnehmen können. Die Beladung der Seitenteilspannrahmen 9 mit neuen Karosserieteilen 8 an einem geeigneten nicht dargestellten Platz kann ebenfalls gleichzeitig mit dem Fügevorgang geschehen.

### Bezugszeichenliste

- 1: Karosseriefördersystem mit Ausheber sowie Zentrier- und Spanneinheit
- 2: Vierachsportal
- 3: Portalroboter für 8 und 9
- 4: Querträger (auf 5 verfahrbar)
- 5: Schiene (stationär)
- 6: Teleskop
- 7: Roboter zur Zuführung von 8 zu 9
- 8: Karosserieseitenteil
- 9: Seitenteilspannrahmen
- 10: Spannarme
- 11: Werkzeugablage für 9 (Spannrahmenbahnhof)
- 12: unteres Positionier- und Spannelement für 9
- 13: oberes Positionier- und Spannelement für 9
- 15: Dachquerträger (Spriegel)
- 16: Spannrahmen
- 18: Roboter zum Geometrie-Schweißen (seitlich), stationär auf dem Boden angeordnet
- 19: Dachblech
- 20: Zuführeinheit für vorderen Spriegel
- 21: Zuführeinheit für hinteren Spriegel
- 22: Medienkupplung
- 23: Andockeinheit
- 24: flexibles Ausgleichselement

## Patentansprüche

1. Verfahren zum Zuführen, Spannen und Bearbeiten, und Geometrie-Schweißen von Bauteilen von Fahrzeugkarosserien in einer Bearbeitungsstation, wobei die Bodengruppe der Karosserie gegebenenfalls gemeinsam mit mindestens einer Stirnwand durch ein Karosseriefördersystem (1) in die Station zum Geometrieschweißen gebracht und dort exakt positioniert wird, die Karosserieseitenteile (8) in einen Seitenteilspannrahmen (9) eingelegt, in der Schweißstation positioniert, mit den zu verschweißenden Teilen verspannt und Karosserieseitenteile, Bodengruppe und gegebenenfalls Dachteile mit Hilfe von seitlich und/oder oberhalb der Karosserie angeordneten Schweißrobotern (18) durch Geometrieschweißen zu einer Karosseriestruktur zusammengefügt und anschließend, vorzugsweise in einer weiteren Schweißstation, vollständig zusammengeschweißt werden, wobei die Seitenteilspannrahmen (9) nach Aufnahme eines Karosserieseitenteiles in die Geometrieschweißstation gebracht, an beiden Seiten der Karosserie positioniert und mit den zu verschweißenden Teilen verspannt und zum Geometrieschweißen die seitlich neben dem Karosseriefördersystem (1) angeordneten Schweißroboter (18) auf die Schweißstellen zugeschwenkt und/oder verfahren werden, **dadurch gekennzeichnet, daß** die Seitenteilspannrahmen mit Hilfe von an einem hochgelegenen Vierachsportal in X/Y-Richtung verfahrbaren Portalrobotern (3) gebracht werden.

2. Verfahren nach Anspruch 1, **dadurch gekennzeichnet, daß** die Seitenteilspannrahmen vor dem Schweißvorgang mit Hilfe von stationären Positionier- und Spannelementen fixiert werden.

3. Vorrichtung zum Zuführen, Spannen und Bearbeiten, und Geometrieschweißen von Bauteilen von Fahrzeugkarosserien in einer Bearbeitungsstation bestehend aus einem Karosseriefördersystem (1) zum Transport und zur exakten Positionierung der Bodengruppe der Karosserie in der Geometrieschweißstation, Seitenteilspannrahmen (9) zum Zuführen der Karosserieseitenteile, gegebenenfalls Zuführeinheiten (20,21) für die vorderen und hinteren Dachquerträger (15), Spanneinrichtungen zum Zusammenfügen und Verspannen der zu verschweißenden Teile, insbesondere der Karosserieseitenteile und neben dem Karosseriefördersystem (1) schwenkbar oder verfahrbar angeordneten Schweißrobotern (18) zum Geometrieschweißen der zusammengefügten und verspannten Teile ein oberhalb der Geometrieschweißstation angeordnetes Vierachsportal (2) **dadurch gekennzeichnet, daß** an dem Vierachsportal auf jeder Seite des Karosseriefördersystemes (1) mindestens ein Portalroboter (3) mit daran aufgehängten Seitenteilspannrahmen (9) in X- und Y-Richtung zwischen einer Position zur Aufnahme der Karosserieseitenteile (8) und einer Position zum Verspannen und Verschweißen der Karosserie verfahrbar ist, wobei daß Vierachsportal (2) aus stationären parellel oder rechtwinklig zum Karosseriefördersystem (1) angeordneten Schienen (5), ein oder mehreren auf den Schienen (5) verfahrbaren Querträgern (4), ein oder mehreren in Längsrichtung der Querträger (4) verfahrbaren Portalrobotern (3) und am Portalroboter (3) vertikal beweglich und/oder um eine senkrechte Achse drehbar befestigten Seitenteilspannrahmen (9) besteht.

4. Vorrichtung nach Anspruch 3, **dadurch gekennzeichnet, daß** bei quer zum Karosseriefördersystem (1) verlaufenden Schienen (5) auf jeder Seite des Karosseriefördersystems (1) ein Querträger (4) angeordnet ist, auf dem mindestens ein Portalroboter (3) innerhalb des dortigen Bereiches des Vierachsportales (2) verfahrbar ist (vgl. Figur 1).

5. Vorrichtung nach Anspruch 3, **dadurch gekennzeichnet, daß** bei parallel zum Karosseriefördersystem (1) verlaufenden Schienen (5) auf jedem Querträger (4) zwei Portalroboter (3) zum gleichzeitigen Zuführen der Seitenteilspannrahmen (9) mit den Karosserieseitenteilen (8) zu den beiden Seiten einer Karosserie angeordnet sind.

6. Vorrichtung nach einem der vorhergehenden Ansprüche 3 bis 5, **dadurch gekennzeichnet, daß** auf jeder Seite des Karosseriefördersystemes (1) mindestens ein für den Portalroboter (3) zugänglicher Bereich vorhanden ist, in dem Werkzeugablagen (11) für eine Reihe von Seitenteilspannrahmen (9) verschiedener Karosseriemodelle angeordnet sind.

7. Vorrichtung nach einem der Ansprüche 3 bis 6, **dadurch gekennzeichnet, daß** jeder Zuführeinheit (20, 21) für den vorderen und hinteren Dachquerträger (15) Ablageplätze zur Ablage von verschiedenen Spannrahmen (16) für die Dachträger (15) verschiedener Karosseriemodelle zugeordnet sind.

8. Vorrichtung nach einem der Ansprüche 3 bis 7, **dadurch gekennzeichnet, daß** die Seitenteilspannrahmen (9) schwimmend mit Hilfe von flexiblen Ausgleichselementen (24) am Portalroboter (3) aufgehängt sind.

9. Vorrichtung nach einem der Ansprüche 3 bis 8, **gekennzeichnet durch** lösbare Verbindungen (22, 23) für die Versorgungsmedien zwischen Portalroboter (3) bzw. Zuführeinheit (20, 21) und Seitenteilspannrahmen (9) bzw. Spannrahmen (16).

## Claims

1. A method for feeding, clamping and processing and geometric welding of car body components in a processing station, where the underbody group of the car body, if any, is brought jointly with at least one front wall through a car body conveyor system (1) into the station for geometric welding and exactly positioned there, and with the car body side sections (8) being laid into a side section clamping frame (9), positioned in the welding station, clamped with the components to be welded, and where car body side sections, underbody group and, if any, roof sections are joined to a car body structure by the aid of welding robots (18) arranged laterally and/or above the car body by way of geometric welding and subsequently welded together completely, preferably in another welding station, **characterised in that** said side section clamping frames are brought into the geometric welding station by the aid of portal robots movable in X/Y direction at an elevated four-axle portal.

2. A method pursuant to Claim 1, **characterised in that** the side section clamping frames are fixed prior to the welding procedure by the aid of stationary positioning and clamping elements.

3. A device for feeding, clamping and processing and geometric welding of car body components in a processing station, consisting of a car body conveyor system (1) for transportation and exact positioning of the underbody group of the car body in the geometric welding station, further composed of side section clamping frames (9) for feeding of car body side sections, feeder units (20, 21), if required, for the front and rear roof cross members (15), clamping devices for joining and clamping of components to be welded, particularly of car body side sections, and composed of welding robots (18) located beside the car body conveyor system (1) in a swivable or movable arrangement for geometric welding of joined and clamped components, **characterised in that** on the four-axle portal at each side of the car body conveyor system (1) at least one portal robot (3) with side section clamping frames (9) is movable in X and Y direction between a position for taking-up the car body side sections (8) and a position for clamping and welding of the car body; with said four-axle portal (2) consisting of stationary rails (5) arranged in parallel or rectangularly to the car body conveyor system (1), one or more cross members (4) movable on rails (5), one or more portal robots (3) movable in longitudinal direction of cross members (4), and side section clamping frames (9) affixed vertically at said portal robot (3) in movable arrangement and/or rotatably around a vertical axle.

4. A device pursuant to Claim 3, **characterised in that** in case there being rails (5) running transversely to the car body conveyor system (1) there is a cross member (4) located at each side of the car body conveyor system (1) on which at least one portal robot (3) is movable within the local area of the four-axle portal (2) (see Figure 1).

5. A device pursuant to Claim 3, **characterised in that** in case there being rails (5) running in parallel to the car body conveyor system (1), there are two portal robots (3) on each cross member (4) for simultaneous feeding of side section clamping frames (9) with car body side sections (8) at both sides of a car body.

6. A device pursuant to one of the preceding claims 3 to 5, **characterised In that** each side of the car body conveyor system (1) provides for at least one area accessible for the portal robot (3) where tool deposits (11) are arranged for a series of side section clamping frames (9) of various car body models.

7. A device pursuant to one of the preceding claims 3 to 6, **characterised in that** deposition places for deposit of various clamping frames (16) for the roof members (15) of various car body models are allocated to each feeding unit (20, 21) for the front and rear roof cross member (15).

8. A device pursuant to one of claims 3 to 7, **characterised in that** the side section clamping frames (9) are hung to the portal robot (3) in floating arrangement by the aid of flexible offset elements (24).

9. A device pursuant to one of claims 3 to 8, **characterised by** detachable connections (22, 23) for the supply media between portal robot (3) and/or feeder unit 20, 21) and side section clamping frames (9) and/or clamping frames (16).

## Revendications

1. Procédé pour amener, serrer et usiner et souder géométriquement des pièces de carrosseries automobiles dans une station d'usinage, le dessous de caisse de la carrosserie étant amené, le cas échéant, avec au moins une face avant dans la station de soudage géométrique par un système de transport des carrosseries (1) et positionné exactement dans ladite station, les éléments latéraux de carrosserie (8) étant posés dans un cadre de serrage d'éléments latéraux (9), positionnés dans la station de soudage, serrés avec les pièces à souder et les éléments latéraux de carrosserie, le dessous de caisse et, le cas échéant, les éléments du toit étant assemblés par soudage géométrique à l'aide de robots de soudage (18) disposés le long de et/ou au-dessus de la carrosserie pour former une structure de carrosserie et soudés ensuite complètement, de préférence dans une autre station de soudage, les cadres de serrage d'éléments latéraux (9) étant amenés dans la station de soudage géométrique après avoir pris un élément latéral de carrosserie, positionnés des deux côtés de la carrosserie et serrés avec les pièces à souder, et les robots de soudage (18) disposés auprès du système de transport des carrosseries (1) étant orientés et/ou amenés sur les points de soudage pour le soudage géométrique, **caractérisé en ce que** les cadres de serrage d'éléments latéraux sont amenés dans la station de soudage à l'aide de robots à portique se déplaçant dans le sens X/Y sur un portique à quatre axes situé à grande hauteur.

2. Procédé selon la revendication1, **caractérisé en ce que** les cadres de serrage d'éléments verticaux sont fixés à l'aide d'éléments de positionnement et de serrage avant l'opération de serrage.

3. Dispositif pour amener, serrer et usiner et souder géométriquement des pièces de carrosseries automobiles dans une station d'usinage, constituée d'un système de transport des carrosseries (1) pour le transport et le positionnement exact du dessous de caisse de la carrosserie dans la station de soudage géométrique, de cadres de serrage d'éléments latéraux (9) pour amener les éléments latéraux de carrosserie, le cas échéant d'unités d'amenée (20, 21) pour les longerons (15) avant et arrière, de dispositifs de serrage pour l'assemblage et le serrage des pièces à souder, en particulier des éléments latéraux de carrosserie et de robots de soudage (18) disposés auprès du système de transport des carrosseries (1) et pouvant être orientés et déplacés pour le soudage géométrique des pièces assemblées et serrées, d'un portique à quatre axes (2) disposé au-dessus de la station de soudage géométrique, **caractérisé en ce qu**'au moins un robot à portique (3) avec des cadres de serrage d'éléments latéraux (9) qui y sont suspendus, peut se déplacer dans le sens X et Y entre une position pour la prise des éléments latéraux de carrosserie (8) et une position de serrage et de soudage de la carrosserie sur le portique à quatre axes de chaque côté du système de transport des carrosserie (1), le portique à quatre axes (2) étant constitué de rails (5) parallèles ou perpendiculaires au système de transport des carrosseries (1), d'un ou de plusieurs longerons (4) se déplaçant sur les rails (5), d'un ou plusieurs robots à portique (3) se déplaçant dans le sens longitudinal des longerons (4) et de cadres de serrage d'éléments latéraux (9) fixés au robot à portique (3) de manière telle qu'ils sont mobiles dans le sens vertical et pivotables autour d'un axe vertical.

4. Dispositif selon la revendication 3, **caractérisé en ce que** dans le cas de rails (5) perpendiculaires au système de transport des carrosseries (1), un longeron (4) est disposé de chaque côté du système de transport des carrosseries (1), un robot à portique (3) au moins se déplaçant sue ce longeron dans les limites de la zone du portique à quatre axes qui s'y trouve (voir Fig. 1).

5. Dispositif selon la revendication 3, **caractérisé en ce que** dans le cas de rails (5) parallèles au système de transport des carrosseries (1) deux robots à portique (3) sont disposés sur chaque longeron (4) pour l'amenée simultanée des cadres de serrage d'éléments latéraux (9) avec les éléments latéraux de la carrosserie (8) vers les deux côtés d'une carrosserie.

6. Dispositif selon l'une des revendications précédentes 3 à 5, **caractérisé en ce qu**'au moins une zone est accessible pour le robot à portique (3) de chaque côté du système de transport des carrosseries (1), des récepteurs à outils (11) pour une série de cadres de serrage d'éléments latéraux (9) de différents modèles de carrosserie étant disposés dans cette zone.

7. Dispositif selon l'une des revendications 3 à 6, **caractérisé en ce que** des places de dépôt pour le dépôt de différents cadres de serrage (16) pour les longerons de toit (15) de différents modèles de carrosserie sont affectés à chaque unité d'amenée (20, 21) pour le longeron (15) de toit avant et arrière.

8. Dispositif selon l'une des revendications 3 à 7, **caractérisé en ce que** les cadres de serrage d'éléments latéraux (9) sont suspendus de manière flottante à l'aide d'éléments de compensation flexibles (24) au robot à portique (3).

9. Dispositif selon l'une des revendications 3 à 8, **caractérisé par** des raccordements détachables (22, 23) pour les fluides d'alimentation entre le robot à portique (3) ou l'unité d'amenée (20, 21) ainsi que des cadres de serrage d'éléments latéraux (9) et des cadres de serrage (16).
